(19) Europäisches Patentamt
European Patent Office
Office européen des brevets

(11) **EP 2 582 170 A1**

(12) **EUROPEAN PATENT APPLICATION**
published in accordance with Art. 153(4) EPC

(43) Date of publication:
**17.04.2013 Bulletin 2013/16**

(51) Int Cl.:
***H04W 24/00*** (2009.01)

(21) Application number: **10853146.8**

(22) Date of filing: **27.12.2010**

(86) International application number:
**PCT/CN2010/080328**

(87) International publication number:
**WO 2011/157038 (22.12.2011 Gazette 2011/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2010 CN 201010207706**

(71) Applicant: **ZTE Corporation
Shenzhen, Guangdong 518057 (CN)**

(72) Inventors:
• **WU, Xin
Shenzhen
Guangdong 518057 (CN)**

• **DAI, Bo
Shenzhen
Guangdong 518057 (CN)**
• **ZENG, Ping
Shenzhen
Guangdong 518057 (CN)**
• **ZUO, Zhisong
Shenzhen
Guangdong 518057 (CN)**

(74) Representative: **Grootscholten, Johannes A.M. et al
Arnold & Siedsma
Sweelinckplein 1
2517 GK Den Haag (NL)**

(54) **METHOD AND USER EQUIPMENT FOR DETECTING DOWNLINK CONTROL INFORMATION IN CARRIER AGGREGATION SCENARIO**

(57) A method for detecting downlink control information is provided in the present invention, in a carrier aggregation scenario, according to a component carrier being a primary component carrier or a secondary component carrier, a user equipment performs Physical Downlink Control Channel (PDCCH) monitoring in the component carrier. A user equipment is also provided in the present invention. With the present invention, monitoring the PDCCH in the carrier aggregation scenario is implemented.

EP 2 582 170 A1

**Description**

Technical Field

The present invention relates to the field of communication, and particularly, to a method and user equipment for detecting downlink control information in a carrier aggregation scenario.

Background of the Related Art

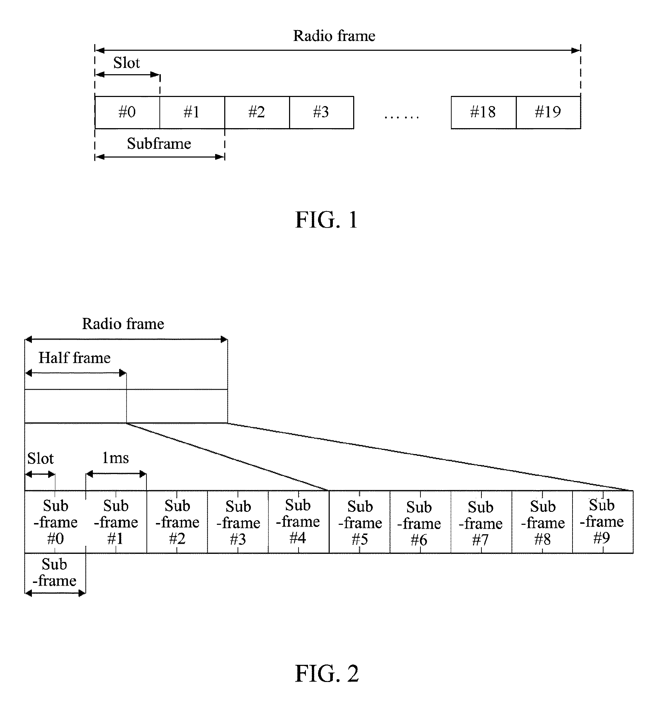

A radio frame in a Long Term Evolution (LTE) system includes frame structures of Frequency Division Duplex (FDD) mode and Time Division Duplex (TDD) mode. The frame structure of the FDD mode is as shown in FIG. 1, one 10ms radio frame is composed of twenty slots with lengths of 0.5ms and serial numbers 0~19, and slots 2i and 2i+1 constitute a subframe i with a length of 1ms. The frame structure of the TDD mode is as shown in FIG. 2, one 10ms radio frame is composed of two half frames with lengths of 5ms, and one half frame includes 5 subframes with lengths of 1ms, and the subframe i is defined as 2 slots 2i and 2i+1 with lengths of 0.5ms. In the above two frame structures, with regard to Normal Cyclic Prefix (Normal CP), one slot contains 7 symbols with lengths of 66.7us, wherein the CP length of the first symbol is 5.21us, and the CP length of each symbol in the other 6 symbols is 4.69us; with regard to Extended Cyclic Prefix (Extended CP), one slot contains 6 symbols, and the CP length of each symbol is 16.67us.

A version number of the LTE corresponds to Release 8 (R8), and a version number corresponding to an added version of the LTE is Release 9 (R9), and with regard to the future LTE-Advance, a version number of the future LTE-Advance is Release 10 (R10). In the LTE, the following three downlink physical control channels are defined: Physical Control Format Indicator Channel (PCFICH), Physical Hybrid Automatic Retransmission Request Indicator Channel (PHICH) and Physical Downlink Control Channel (PDCCH).

Wherein, information borne by the PCFICH is used for indicating the number of Orthogonal Frequency Division Multiplexing (OFDM) symbols of the PDCCH transmitted in one subframe, and transmission is performed in the first OFDM symbol of the subframe, and the located frequency position is determined by a downlink system bandwidth and a cell Identity (ID).

The PHICH is used for bearing Acknowledgement/Negative Acknowledgement (ACK/NACK) feedback information of uplink transmission data. The number of PHICHs and a time-frequency position can be determined by a system message and the cell ID in a Physical Broadcast Channel (PBCH) of a downlink carrier in which the PHICH is located.

The PDCCH is used for bearing Downlink Control Information (DCI), including: uplink scheduling information, downlink scheduling information and uplink power control information. DCI formats are divided into the following types: DCI format 0, DCI format 1, DCI format 1A, DCI format 1B, DCI format 1C, DCI format 1D, DCI format 2, DCI format 2A, DCI format 3 and DCI format 3A and so on; wherein:

the DCI format 0 is used for indicating scheduling of a Physical Uplink Shared Channel (PUSCH);

the DCI format 1, DCI format 1A, DCI format 1B, DCI format 1C and DCI format 1D are used for different modes scheduled by one PDSCH code word;

the DCI format 2, DCI format 2A and DCI format 3 are used for different modes of space division multiplexing; and

the DCI format 3 and DCI format 3A are used for different modes of power control commands of a Physical Uplink Control Channel (PUCCH) and the PUSCH.

Physical resources transmitted by the Physical Downlink Control Channel (PDCCH) take a Control Channel Element (CCE) as a unit, and the size of one CCE is 9 Resource Element Groups (REGs) namely 36 Resource Elements, and one PDCCH may occupy 1, 2, 4 or 8 CCEs. With regard to the sizes of these four PDCCHs occupying 1, 2, 4 and 8 CCEs, a tree aggregation is adopted, that is, the PDCCH occupying 1 CCE can start from an arbitrary CCE position; the PDCCH occupying 2 CCEs can start from an even CCE position; the PDCCH occupying 4 CCEs can start from a CCE position which is an integral multiple of 4; and the PDCCH occupying 8 CCEs can start from a CCE position which is an integral multiple of 8.

Each aggregation level defines one search space, including a common search space and a User Equipment (UE)-specific search space. The number of CCEs of the entire search space is determined by the number of PHICH groups and the number of OFDM symbols occupied by a control region indicated by the PCFICH in each downlink subframe. A UE performs blind detection on all probable PDCCH code rates according to a DCI format of the transmission mode where the UE is located in the search space.

In the kth subframe, the control domain bearing the PDCCH is composed of $N_{CCE,k}$ CCEs with a group of serial numbers from 0 to $N_{CCE,k}$ -1. The UE should detect a group of PDCCH candidates in each non-Discontinuous Reception (non-DRX) to acquire control information, and detection refers to decoding the PDCCHs within the group according to all DCI formats to be detected. The PDCCH candidates required to be detected are defined in a way of search space, and with respect to the aggregation level $L \in \{1,2,4,8\}$, the search space $S_k^{(L)}$ is defined by a group of PDCCH candidates.

The CCE corresponding to PDCCH candidate m in the search space $S_k^{(L)}$ is defined by the following formula:

$$L \cdot \left\{ \left( Y_k + m \right) \bmod \left\lfloor N_{\mathrm{CCE},k} / L \right\rfloor \right\} + i \,,$$

wherein $i = 0,...,L$-1, $m = 0,\cdots,M^{(L)}$-1, $M^{(L)}$ is the number of PDCCH candidates to be detected in the search space $S_k^{(L)}$.

For the common search space, $Y_k = 0$ , and L takes 4 and 8.

For the UE-specific search space, L takes 1, 2, 4 and 8.

$$Y_k = \left( A \cdot Y_{k-1} \right) \bmod D \,,$$

wherein $Y_{-1} = n_{RTNI} \neq 0$, $A = 39827$ , $D = 65537$ , $k = \lfloor n_s/2 \rfloor$, $\lfloor \ \rfloor$ represents rounding down, and $n_s$ is a slot number in the radio frame. $n_{RNTI}$ is a corresponding Radio Network Temporary Identifier (RNTI).

The UE should detect one common search space with the aggregation level of 4 and one common search space with the aggregation level of 8, and one UE-specific search space with the aggregation level of 1, 2, 4 or 8 respectively, and the common search space and UE-specific search space can be overlapped. The specific times of detection and the corresponding search spaces are as shown in Table 1.

Table 1

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

Through a high layer signaling, the UE is semi-statically configured to receive PDSCH data transmission according to an indication of the PDCCH in the UE-specific search space based on one of the following transmission modes:

mode 1: Single-antenna port; port 0

mode 2: Transmit diversity

mode 3: Open-loop spatial multiplexing

mode 4: Closed-loop spatial multiplexing

mode 5: Multi-user MIMO

mode 6: Closed-loop Rank=1 precoding

mode 7: Single-antenna port; port 5

If the UE is configured by a high layer to use Cyclical Redundancy Check (CRC) scrambled by a Cell Radio Network Temporary Identifier (C-RNTI) to perform PDCCH decoding, the UE should decode the PDCCH and all the related PDSCHs according to corresponding combinations defined in Table 2.

Table 2

| UE downlink transmission mode | DCI format | Search space | PDSCH transmission scheme corresponding to PDCCH |
|---|---|---|---|
| Mode 1 | DCI format 1A | Common and UE specific defined by C-RNTI | Single-antenna port, port 0 |
| | DCI format 1 | UE specific defined by C-RNTI | Single-antenna port, port 0 |
| Mode 2 | DCI format 1A | Common and UE specific defined by C-RNTI | Transmit diversity |
| | DCI format 1 | UE specific defined by C-RNTI | Transmit diversity |
| Mode 3 | DCI format 1A | Common and UE specific defined by C-RNTI | Transmit diversity |
| | DCI format 2A | UE specific defined by C-RNTI | Open-loop spatial multiplexing or Transmit diversity |
| Mode 4 | DCI format 1A | Common and UE specific defined by C-RNTI | Transmit diversity |
| | DCI format 2 | UE specific defined by C-RNTI | Closed-loop spatial multiplexing or Transmit diversity |
| Mode 5 | DCI format 1A | Common and UE specific defined by C-RNTI | Transmit diversity |
| | DCI format 1D | UE specific defined by C-RNTI | Multi-user MIMO |
| Mode 6 | DCI format 1A | Common and UE specific defined by C-RNTI | Transmit diversity |
| | DCI format 1B | UE specific defined by C-RNTI | Closed-loop Rank=1 precoding |
| Mode 7 | DCI format 1A | Common and UE specific defined by C-RNTI | If the number of antenna ports of PBCH is 1, single-antenna port and port 0 are used, otherwise transmit diversity is used |
| | DCI format 1 | UE specific defined by C-RNTI | Single-antenna port; port 5 |
| Mode 8 | DCI format 1A | Common and UE specific defined by C-RNTI | If the number of antenna ports of PBCH is 1, single-antenna port and port 0 are used, otherwise transmit diversity is used |
| | DCI format 2B | UE specific defined by C-RNTI | dual-layer transmission, ports 7 and 8; or Single-antenna port, port 7 or 8 |

If the UE is configured by the high layer to use the CRC scrambled by a Semi-persistently Scheduled Cell Radio Network Temporary Identifier (SPS C-RNTI) to perform PDCCH decoding, the UE should decode the PDCCH and all the related PDSCHs according to corresponding combinations defined in Table 3.

Table 3

| UE downlink transmission mode | DCI format | Search space | PDSCH transmission scheme corresponding to PDCCH |
|---|---|---|---|
| Mode 1 | DCI format 1A | Common and UE specific defined by C-RNTI | Single-antenna port, port 0 |
| | DCI format 1 | UE specific defined by C-RNTI | Single-antenna port, port 0 |
| Mode 2 | DCI format 1A | Common and UE specific defined by C-RNTI | Transmit diversity |
| | DCI format 1 | UE specific defined by C-RNTI | Transmit diversity |
| Mode 3 | DCI format 1A | Common and UE specific defined by C-RNTI | Transmit diversity |
| | DCI format 2A | UE specific defined by C-RNTI | Transmit diversity |
| Mode 4 | DCI format 1A | Common and UE specific defined by C-RNTI | Transmit diversity |
| | DCI format 2 | UE specific defined by C-RNTI | Transmit diversity |
| Mode 5 | DCI format 1A | Common and UE specific defined by C-RNTI | Transmit diversity |
| Mode 6 | DCI format 1A | Common and UE specific defined by C-RNTI | Transmit diversity |
| Mode 7 | DCI format 1A | Common and UE specific defined by C-RNTI | Single-antenna port, port 5 |
| | DCI format 1 | UE specific defined by C-RNTI | Single-antenna port, port 5 |
| Mode 8 | DCI format 1A | Common and UE specific defined by C-RNTI | Single-antenna port, port 7 |
| | DCI format 2B | UE specific defined by C-RNTI | Single-antenna port, port 7 or 8 |

If the UE is configured by the high layer to use the CRC scrambled by a System Information-Cell Radio Network Temporary Identifier (SI-RNTI) to perform PDCCH decoding, the UE should decode the PDCCH according to corresponding combinations defined in Table 4.

Table 4

| DCI format | Search space | PDSCH transmission scheme corresponding to PDCCH |
|---|---|---|
| DCI format 1C | Common search space | If the number of antenna ports of PBCH is 1, single-antenna port and port 0 are used, otherwise transmit diversity is used |
| DCI format 1A | Common search space | If the number of antenna ports of PBCH is 1, single-antenna port and port 0 are used, otherwise transmit diversity is used |

If the UE is configured by the high layer to use the CRC scrambled by a Paging-Cell Radio Network Temporary Identifier (P-RNTI) to perform PDCCH decoding, the UE should decode the PDCCH according to corresponding combinations defined in Table 5.

Table 5

| DCI format | Search space | PDSCH transmission scheme corresponding to PDCCH |
|---|---|---|
| DCI format 1C | Common search space | If the number of antenna ports of PBCH is 1, single-antenna port and port 0 are used, otherwise transmit diversity is used |

(continued)

| DCI format | Search space | PDSCH transmission scheme corresponding to PDCCH |
|---|---|---|
| DCI format 1A | Common search space | If the number of antenna ports of PBCH is 1, single-antenna port and port 0 are used, otherwise transmit diversity is used |

If the UE is configured by the high layer to use the CRC scrambled by a Random Access Channel-Cell Radio Network Temporary Identifier (RA-RNTI) to perform PDCCH decoding, the UE should decode the PDCCH according to corresponding combinations defined in Table 6.

Table 6

| DCI format | Search space | PDSCH transmission scheme corresponding to PDCCH |
|---|---|---|
| DCI format 1C | Common search space | If the number of antenna ports of PBCH is 1, single-antenna port and port 0 are used, otherwise transmit diversity is used |
| DCI format 1A | Common search space | If the number of antenna ports of PBCH is 1, single-antenna port and port 0 are used, otherwise transmit diversity is used |

Since an LTE-Advanced network requires the access of an LTE user, an operation band of the LTE-Advanced network is required to cover the current LTE band, and since there has been no allocable and continuous 100MHz spectral bandwidth on this band, a direct technology required to be solved by the LTE-Advanced is to adopt carrier aggregation technology to aggregate certain continuous component carriers (frequency spectrums) distributed on different bands, thereby forming the 100MHz bandwidth which can be used by the LTE-Advanced. That is, with regard to the aggregated frequency spectrums, they are divided into n component carriers (frequency spectrums), and the frequency spectrums within each component carrier (frequency spectrum) are continuous.

3GPP sets that a way of cross component carrier scheduling can be used to schedule multiple component carriers in a carrier aggregation scenario, that is, the Physical Downlink Control Channels (PDCCHs) of other component carriers can be monitored on a certain component carrier. Therefore, it is required to add a Carrier Indicator Field (CIF) in the Downlink Control Information (DCI) format, so as to determine the PDCCH of which component carrier the monitored PDCCH is.

In the related art, in the carrier aggregation scenario, if aggregation of multiple component carriers occurs, it is required to define one component carrier as a Primary Component Carrier (PCC, also called as a main component carrier), and then the rest component carriers are defined as Secondary Component Carriers (SCC, also called as auxiliary component carrier). In addition, the component carrier can be called as a serving cell, and the primary component carrier can be called as a primary serving cell, and a secondary component carrier can be called as a secondary serving cell. Currently, there is no determined scheme to specify how to modify the PDCCH monitoring mode, thereby bringing inconvenience to practical applications.

Summary of the Invention

The technical problem required to be solved by the present invention is, in a carrier aggregation scenario, to provide a method and user equipment for detecting downlink control information, which is used for managing PDCCH monitoring.

In order to solve the above technical problem, the present invention provides a method for detecting downlink control information, which comprises: in a carrier aggregation scenario, according to a component carrier being a primary component carrier or a secondary component carrier, a user equipment performing Physical Downlink Control Channel (PDCCH) monitoring in the component carrier.

Wherein, the performing the PDCCH monitoring in the component carrier comprises: when the component carrier is the primary component carrier, performing the PDCCH monitoring in a User Equipment (UE)-specific search space and a common search space.

Wherein, the performing the PDCCH monitoring in the component carrier comprises: when the component carrier is the primary component carrier, in the common search space, performing Downlink Control Information (DCI) format monitoring according to Cyclical Redundancy Checks (CRCs) scrambled by a Cell Radio Network Temporary Identifier (C-RNTI), a Transmit Power Control-Physical Uplink Control Channel Radio Network Temporary Identifier (TPC-PUCCH-RNTI), a Transmit Power Control-Physical Uplink Shared Channel Radio Network Temporary Identifier (TPC-PUSCH-RNTI), a Semi-persistently Scheduled Cell Radio Network Temporary Identifier (SPS C-RNTI), a System Information-Cell Radio Network Temporary Identifier (SI-RNTI), a Paging-Cell Radio Network Temporary Identifier (P-RNTI) and a Random Access Channel-Cell Radio Network Temporary Identifier (RA-RNTI); and

in the UE-specific search space, performing DCI format monitoring according to the CRCs scrambled by the C-RNTI and the SPS C-RNTI.

Wherein, the performing the PDCCH monitoring in the component carrier comprises: when the component carrier is the secondary component carrier, if a Physical Downlink Shared Channel (PDSCH) of the component carrier is scheduled by a PDCCH on the same component carrier, performing the PDCCH monitoring in a corresponding UE-specific search space and the common search space of the secondary component carrier.

Wherein, the performing the PDCCH monitoring in the component carrier comprises: when the component carrier is the secondary component carrier, if the PDSCH of the component carrier is scheduled by the PDCCH on the same component carrier, in the UE-specific search space, performing the DCI format monitoring according to a CRC scrambled by the C-RNTI; and in the common search space, performing the DCI format monitoring according to the CRC scrambled by the C-RNTI;

or, when the component carrier is the secondary component carrier, if the PDSCH of the component carrier is scheduled by the PDCCH on the same component carrier, in the UE-specific search space, performing the DCI format monitoring according to the CRC scrambled by the C-RNTI; and in the common search space, performing the DCI format monitoring according to the CRCs scrambled by the C-RNTI, the TPC-PUCCH-RNTI and the TPC-PUSCH-RNTI.

Wherein, the performing the PDCCH monitoring in the component carrier comprises: when the component carrier is the secondary component carrier, if the PDSCH of the component carrier is scheduled by a PDCCH on other component carriers, only performing the PDCCH monitoring in the UE-specific search space, and not performing the PDCCH monitoring in the common search space.

Wherein, the performing the PDCCH monitoring in the component carrier comprises: when the component carrier is the secondary component carrier, if the PDSCH of the component carrier is scheduled by the PDCCH on other component carriers except the component carrier self, in the UE-specific search space, performing the DCI format monitoring according to the CRC scrambled by the C-RNTI; and in the common search space, not monitoring any DCI format.

Wherein, the performing the PDCCH monitoring in the component carrier comprises: when the component carrier is the secondary component carrier, only performing the PDCCH monitoring in the corresponding UE-specific search space, and not performing the PDCCH monitoring in the common search space of the secondary component carrier.

Wherein, the performing the PDCCH monitoring in the component carrier comprises: when the component carrier is the secondary component carrier, in the UE-specific search space, performing the DCI format monitoring according to the CRC scrambled by the C-RNTI; and in the common search space, not monitoring any DCI format.

Wherein, the performing the PDCCH monitoring in the component carrier comprises: when a random access operation is performed, in the UE-specific search space or the common search space, performing the DCI format monitoring according to a CRC scrambled by a temporary C-RNTI.

Wherein, when the component carrier is the secondary component carrier, in the UE-specific search space, the user equipment monitors that search space and time corresponding to PDCCH candidates of the UE-specific search space are identical with the search space and time corresponding to the PDCCH candidates of the UE-specific search space monitored by the user equipment in the primary component carrier.

Wherein, when the component carrier is the secondary component carrier, in the UE-specific search space, the user equipment monitors that the search space and time corresponding to the PDCCH candidates of the UE-specific search space are more than the search space and time corresponding to the PDCCH candidates of the UE-specific search space monitored by the user equipment in the primary component carrier, wherein, in one or multiple aggregation levels, K PDCCH candidates are added in total, and the K is not greater than 6.

Wherein, the K is 3.

Wherein, when no DCI format in the common search space of the secondary component carrier is detected, the K is 6.

Wherein, the method further comprises: according to a method for defining uplink and downlink transmission mode configuration information and a search space, a base station sending corresponding DCI formats in the primary component carrier and the secondary component carrier.

Wherein, the primary component carrier and the secondary component carrier are configured by a high layer signaling, or a carrier set configured by the high layer signaling represents the primary component carrier or the secondary component carrier.

The present invention further provides a user equipment, and the user equipment is configured to: in a carrier aggregation scenario, according to a component carrier being a primary component carrier or a secondary component carrier, perform Physical Downlink Control Channel (PDCCH) monitoring in the component carrier.

Wherein, the user equipment is configured to: when the component carrier is the primary component carrier,

in a common search space, perform Downlink Control Information (DCI) format monitoring according to Cyclical Redundancy Checks (CRCs) scrambled by a Cell Radio Network Temporary Identifier (C-RNTI), a Transmit Power Control-Physical Uplink Control Channel Radio Network Temporary Identifier (TPC-PUCCH-RNTI), a Transmit Power Control-Physical Uplink Shared Channel Radio Network Temporary Identifier (TPC-PUSCH-RNTI), a Semi-persistently Scheduled Cell Radio Network Temporary Identifier (SPS C-RNTI), a System Information-Cell Radio Network Temporary Identifier (SI-RNTI), a Paging-Cell Radio Network Temporary Identifier (P-RNTI) and a Random Access Channel-Cell Radio Network Temporary Identifier (RA-RNTI); and

in a User Equipment (UE)-specific search space, perform the DCI format monitoring according to the CRCs scrambled by the C-RNTI and the SPS C-RNTI.

Wherein, the user equipment is configured to: when the component carrier is the secondary component carrier, if a Physical Downlink Shared Channel (PDSCH) of the component carrier is scheduled by a PDCCH on the same component carrier, perform the PDCCH monitoring in a corresponding UE-specific search space and the common search space of the secondary component carrier.

Wherein, the user equipment is configured to: when the component carrier is the secondary component carrier, if the PDSCH of the component carrier is scheduled by the PDCCH on the same component carrier, in the UE-specific search space, perform the DCI format monitoring according to a CRC scrambled by the C-RNTI; and in the common search space, perform the DCI format monitoring according to the CRC scrambled by the C-RNTI.

Wherein, the user equipment is configured to: when the component carrier is the secondary component carrier, if the PDSCH of the component carrier is scheduled by a PDCCH on other component carriers, only perform the PDCCH monitoring in the UE-specific search space, and not perform the PDCCH monitoring in the common search space.

Wherein, the user equipment is configured to: when the component carrier is the secondary component carrier, if the PDSCH of the component carrier is scheduled by the PDCCH on other component carriers except the component carrier self, in the UE-specific search space, perform the DCI format monitoring according to the CRC scrambled by the C-RNTI; and in the common search space, not monitor any DCI format.

Wherein, the user equipment is configured to: when the component carrier is the secondary component carrier, only perform the PDCCH monitoring in the corresponding UE-specific search space, and not perform the PDCCH monitoring in the common search space of the secondary component carrier.

Wherein, the user equipment is configured to: when the component carrier is the secondary component carrier, in the UE-specific search space, perform the DCI format monitoring according to the CRC scrambled by the C-RNTI; and in the common search space, not monitor any DCI format.

Wherein, the user equipment is configured to: when a random access operation is performed, in the UE-specific search space or the common search space, perform the DCI format monitoring according to a CRC scrambled by a temporary C-RNTI.

Wherein, the user equipment is configured to: when the component carrier is the secondary component carrier, in the UE-specific search space, monitor that search space and time corresponding to PDCCH candidates of the UE-specific search space are identical with the search space and time corresponding to the PDCCH candidates of the UE-specific search space monitored in the primary component carrier.

Wherein, the user equipment is configured to: when the component carrier is the secondary component carrier, in the UE-specific search space, monitor that the search space and time corresponding to the PDCCH candidates of the UE-specific search space are more than the search space and time corresponding to the PDCCH candidates of the UE-specific search space monitored in the primary component carrier, wherein, in one or multiple aggregation levels, K PDCCH candidates are added in total, and the K is not greater than 6.

Wherein, the K is 3.

Wherein, when no DCI format in the common search space of the secondary component carrier is detected, the K is 6.

Wherein, the user equipment is configured to: acquire the primary component carrier and the secondary component carrier according to a high layer signaling configuration, or acquire the primary component carrier and the secondary component carrier according to a carrier set configured by a high layer signaling.

In conclusion, with the present invention, the problem how to manage the PDCCH monitoring is solved in the carrier aggregation scenario of the LTE-Advanced.

Brief Description of Drawings

FIG. 1 is a schematic diagram of frame structure of the FDD mode in the related art.

FIG. 2 is a schematic diagram of frame structure of the TDD mode in the related art.

Preferred Embodiments of the Present Invention

The present invention provides a method and user equipment for detecting downlink control information in a carrier aggregation scenario, which is used for managing PDCCH monitoring in a carrier aggregation system.

The present invention provides a method for detecting downlink control information, which includes:

in a carrier aggregation scenario, according to a corresponding component carrier being a primary component carrier or a secondary component carrier, a User Equipment (UE) performing PDCCH monitoring.

Wherein, when the component carrier is the primary component carrier, the UE performs the PDCCH monitoring in a UE-specific search space and a common search space. Specifically, in the common search space, DCI format monitoring is performed according to CRCs scrambled by C-RNTI, TPC-PUCCH-RNTI, TPC-PUSCH-RNTI, SPS C-RNTI, SI-RNTI, P-RNTI and RA-RNTI and so on, and in the UE-specific search space, the DCI format monitoring is performed according to the CRCs scrambled by the C-RNTI and SPS C-RNTI and so on, but which kind of DCI format to be monitored is defined by a transmission mode configured by a high layer signaling.

Wherein, when the component carrier is the secondary component carrier, it includes:

(1) if a Physical Downlink Shared Channel (PDSCH) of the component carrier is scheduled by a PDCCH on the same component carrier, performing the PDCCH monitoring in a corresponding UE-specific search space and the common search space of the secondary component carrier. Specifically, in the UE-specific search space, the DCI format monitoring is performed according to a CRC scrambled by the C-RNTI; and in the common search space, the DCI format monitoring is performed according to the CRC scrambled by the C-RNTI , but which kind of DCI format to be monitored is defined by a transmission mode configured by a high layer signaling; or, when the component carrier is the secondary component carrier, if the PDSCH of the component carrier is scheduled by the PDCCH on the same component carrier, in the UE-specific search space, the DCI format monitoring is performed according to the CRC scrambled by the C-RNTI; and in the common search space, the DCI format monitoring is performed according to the CRCs scrambled by the C-RNTI, TPC-PUCCH-RNTI and TPC-PUSCH-RNTI.

(2) when the component carrier is the secondary component carrier, if the PDSCH of the component carrier is scheduled by a PDCCH on other component carriers, only performing the PDCCH monitoring in the UE-specific search space, and not performing the PDCCH monitoring in the common search space. Specifically, in the UE-specific search space, the DCI format monitoring is performed according to the CRC scrambled by the C-RNTI; and in the common search space, no DCI format is monitored.

(3) when the component carrier is the secondary component carrier, only performing the PDCCH monitoring in the corresponding UE-specific search space, and not performing the PDCCH monitoring in the common search space of the secondary component carrier. Specifically, in the UE-specific search space, the DCI format monitoring is performed according to the CRC scrambled by the C-RNTI; and in the common search space, no DCI format is monitored. The condition includes the following circumstances: when the component carrier is the secondary component carrier, and the PDSCH of the component carrier is scheduled by the PDCCH on the same component carrier, only performing the PDCCH monitoring in the corresponding UE-specific search space, and not performing the PDCCH monitoring in the common search space of the secondary component carrier.

Furthermore, when a random access operation is performed, in the UE-specific search space or the common search space, the UE also can perform the DCI format monitoring according to a CRC scrambled by a temporary C-RNTI.

Wherein, the above primary component carrier and secondary component carrier can be configured by the high layer signaling, or a carrier set configured by the high layer signaling represents the primary component carrier or secondary component carrier.

Wherein, in the carrier aggregation scenario, with regard to the secondary component carrier, in the UE-specific search space, the UE performs the PDCCH monitoring according to a method for monitoring the primary component carrier, and the UE monitors that search space and time corresponding to PDCCH candidates of the UE-specific search space are identical with the search space and time corresponding to the PDCCH candidates of the UE-specific search space monitored by the UE in the primary component carrier.

Wherein, in the carrier aggregation scenario, with regard to the secondary component carrier, in the UE-specific search space, the UE also can perform the PDCCH monitoring according to the method for monitoring the primary component carrier, but the UE monitors that the search space and time corresponding to the PDCCH candidates of the UE-specific search space are different from that of the primary component carrier. Specifically, with regard to the secondary component carrier, the UE monitors that the search space and time corresponding to the PDCCH candidates of the UE-specific search space are more than the search space and time corresponding to the PDCCH candidates of the UE-specific search space monitored by the user equipment in the primary component carrier, wherein, in one or multiple aggregation levels, K PDCCH candidates are added in total, and the K is not greater than 6. For example, with respect to the situations in (1), K can be 3, and with respect to the situations in (2) and (3), that is, no DCI format in the common search space of the secondary component carrier is detected, K can be 6.

Wherein, according to a method for defining uplink and downlink transmission mode configuration information and a search space, a base station sends corresponding DCI formats in the primary component carrier and the secondary component carrier. Here, a definition for the search space includes a configuration 1, configuration 2 and configuration 3 mentioned below.

For a further description, when cross component carrier schedulingis not enabled, with regard to the secondary component carrier, in the UE-specific search space, the UE performs the PDCCH monitoring according to one of the above configuration methods, and in the common search space, it only performs the DCI format monitoring according to the CRC scrambled by the C-RNTI.

For a further description, when cross component carrier scheduling is enabled, with regard to the secondary component carrier, if the secondary component carrier is the component carrier which executes the cross component carrier scheduling, in the UE-specific search space, the UE performs the PDCCH monitoring according to one of the above configuration methods, and in the common search space, UE will perform the DCI format monitoring according to the CRC scrambled by the C-RNTI; if the secondary component carrier is the component carrier to which the cross component carrier scheduling is executed, the UE will monitor the DCI format of the UE-specific search space of the secondary component carrier on the component carrier which executes the cross component carrier scheduling to the secondary component carrier, and in the monitoring method, monitoring can be performed according to one of the above configuration methods, and detecting can be performed according to the configuration method of adding 6 PDCCH candidates in total in a certain or multiple aggregation levels, but no DCI format in the common search space is monitored.

The specific methods for monitoring the DCI format in the common search space and UE-specific search space include:

Method 1

In the carrier aggregation scenario, with regard to the primary component carrier, the UE performs the DCI format monitoring in the common search space according to the CRCs scrambled by the C-RNTI, TPC-PUCCH-RNTI, TPC-PUSCH-RNTI, SPS C-RNTI, SI-RNTI, P-RNTI and RA-RNTI and so on, and it performs the DCI format monitoring in the UE-specific search space according to the CRCs scrambled by C-RNTI and SPS C-RNTI and so on, but which kind of DCI format to be monitored is defined by the transmission mode configured by the high layer signaling.

However, with regard to the secondary component carrier, in the UE-specific search space and the common search space, the UE performs the DCI format monitoring according to the CRC scrambled by C-RNTI, but which kind of DCI format to be monitored is defined by the transmission mode configured by the high layer signaling. Wherein, with regard to the secondary component carrier, when the random access operation is performed, in the UE-specific search space, the UE also can perform the DCI format monitoring according to the CRC scrambled by the temporary C-RNTI.

With regard to the secondary component carrier, the method for monitoring the PDCCH in the common search space and UE-specific search space of the secondary component carrier can be divided into the following three configurations.

Configuration 1:

with regard to the secondary component carrier, in the UE-specific search space, the UE performs the PDCCH monitoring according to the method for monitoring the primary component carrier, and the UE monitors the search space and time corresponding to the PDCCH candidates of the UE-specific search space, as shown in Table 7.

Table 7

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6 |
| | 2 | 12 | 6 |
| | 4 | 8 | 2 |
| | 8 | 16 | 2 |

Configuration 2:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 8.

Table 8

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6+A |
| | 2 | 12 | 6+B |
| | 4 | 8 | 2+C |
| | 8 | 16 | 2+D |

Wherein, A, B, C and D are values greater than or equal to 0 and less than or equal to 3 simultaneously, and A+B+C+D=3.

Configuration 3:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 9.

Table 9

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | 6+A |
| | 2 | 12 | 6+B |
| | 4 | 8 | 2+C |
| | 8 | 16 | 2+D |

Wherein, A, B, C and D are values greater than or equal to 0 and less than or equal to 6 simultaneously, and A+B+C+D=6.

With regard to the secondary component carrier, there are two scenarios where the design of PDCCH monitoring needs to be performed as follows.

Scenario 1:

when the cross component carrier scheduling is not enabled, with regard to the secondary component carrier, in the UE-specific search space, the UE performs the PDCCH monitoring according to the method of the above configuration 1 or 2, and in the common search space, UE performs the DCI format monitoring according to the CRC scrambled by the C-RNTI (temporary C-RNTI).

Scenario 2:

when the cross component carrier scheduling is enabled, with regard to the secondary component carrier, if the secondary component carrier is the component carrier which executes the cross component carrier scheduling, in the UE-specific search space, the UE performs the PDCCH monitoring according to the method of the above configuration 1 or 2, and in the common search space, UE will perform the DCI format monitoring according to the CRC scrambled by the C-RNTI (temporary C-RNTI); if the secondary component carrier is the component carrier to which the cross component carrier scheduling is executed, the UE will monitor the DCI format of the UE-specific search space of the secondary component carrier on the component carrier which executes the cross component carrier scheduling to the secondary component carrier, and in the monitoring method, monitoring is performed according to the method of the above configuration 1, 2 or 3, but no DCI format in the common search space is monitored.

Method 2

In the carrier aggregation scenario, with regard to the primary component carrier, the UE performs the DCI format monitoring according to the CRCs scrambled by the C-RNTI, SPS C-RNTI, SI-RNTI, P-RNTI and RA-RNTI in the common search space, and performs the DCI format monitoring according to the CRCs scrambled by C-RNTI and SPS C-RNTI in the UE-specific search space, but which kind of DCI format to be monitored is defined by the transmission mode configured by the high layer signaling. However, with regard to the secondary component carrier, the UE can monitor the DCI formats in the UE-specific search space according to the method for monitoring the primary component carrier, and UE does not monitor any DCI format in the common search space.
With regard to the secondary component carrier, the method for monitoring the PDCCH in the common search space and UE-specific search space of the secondary component carrier can be divided into the following two configurations.

Configuration 4:

with regard to the secondary component carrier, in the UE-specific search space, the UE performs the PDCCH monitoring according to the method for monitoring the primary component carrier, and the UE monitors the search space and time corresponding to the PDCCH candidates of the UE-specific search space, as shown in Table 7.

Configuration 5:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 9.
Wherein, A, B, C and D are values greater than or equal to 0 and less than or equal to 6 simultaneously, and A+B+C+D=6.
With regard to the secondary component carrier, there are two scenarios where the design of PDCCH monitoring needs to be performed as follows.

Scenario 1:

when the cross component carrier scheduling is not enabled, with regard to the secondary component carrier, in the UE-specific search space, the UE performs the PDCCH monitoring according to the method of the above configuration 4 or 5, and in the common search space, it does not monitor all the DCI formats in the common search space.

Scenario 2:

when the cross component carrier scheduling is enabled, with regard to the secondary component carrier, if the secondary component carrier is the component carrier which executes the cross component carrier scheduling, or if the secondary component carrier is the component carrier to which the cross component carrier scheduling is executed, in the UE-specific search space, the UE performs the PDCCH monitoring according to the method of the above configuration 4 or 5, and in the common search space, UE does not monitor all the DCI formats in the common search space.

Example 1

In the carrier aggregation scenario, with regard to how the UE performs the PDCCH monitoring, the following ways can be followed.

In the carrier aggregation scenario, with regard to the primary component carrier, the UE performs the DCI format monitoring according to the CRCs scrambled by the C-RNTI, SPS C-RNTI, SI-RNTI, P-RNTI and RA-RNTI in the common search space, and performs the DCI format monitoring according to the CRCs scrambled by C-RNTI and SPS C-RNTI in the UE-specific search space, but which kind of DCI format to be monitored is defined by the transmission mode configured by the high layer signaling. However, with regard to the secondary component carrier, the UE can monitor the DCI formats in the UE-specific search space according to the method for monitoring the primary component carrier, and in the common search space, it only performs the DCI format monitoring according to the CRC scrambled by C-RNTI, and specifically, the DCI format 1C is not monitored any more, but only the DCI format 1A, or DCI format 0, or DCI format 3/3A is monitored.

With regard to the secondary component carrier, the method for monitoring the PDCCH in the common search space and UE-specific search space of the secondary component carrier can be divided into the following two configurations.

Configuration 1:

with regard to the secondary component carrier, in the UE-specific search space, the UE performs the PDCCH monitoring according to the method for monitoring the primary component carrier, and the UE monitors the search space and time corresponding to the PDCCH candidates of the UE-specific search space, as shown in Table 7.

Therefore, the number of monitoring times in the UE-specific search space is still the same as that of the primary component carrier, which is (6+6+2+2)x2=32, and the number of monitoring times in the common search space reduces by half, which is 4+2=6 instead of the (4+2)x2=12 in the primary component carrier.

Configuration 2:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 8.

Wherein, A, B, C and D are values greater than or equal to 0 and less than or equal to 3 simultaneously, and A+B+C+D=3. A=1, B=2, C=0, and D=0. For another example, A=2, B=1, C=0, and D=0.

Therefore, the number of monitoring times in the UE-specific search space is different from that of the primary component carrier, which changes from the original (6+6+2+2)x2=32 to (6+A+6+B+2+C+2+D)x2, and the number of monitoring times in the common search space reduces by half, which is 4+2=6 instead of the (4+2)x2=12 in the primary component carrier.

Configuration 3:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 9.

wherein, A, B, C and D are values greater than or equal to 0 and less than or equal to 6 simultaneously, and A+B+C+D=6. A=4, B=2, C=0, and D=0. For another example, A=0, B=4, C=2, and D=0.

Therefore, the number of monitoring times in the UE-specific search space is different from that of the primary component carrier, which changes from the original (6+6+2+2)x2=32 to (6+A+6+B+2+C+2+D)x2, and the number of monitoring times in the common search space is 0 instead of the (4+2)x2=12 in the primary component carrier.

With regard to the secondary component carrier, there are two scenarios where the design of PDCCH monitoring needs to be performed as follows.

Scenario 1:

when the cross component carrier scheduling is not enabled, with regard to the secondary component carrier, in the UE-specific search space, the UE performs the PDCCH monitoring according to the method of the above configuration 1 or 2, and in the common search space, it only performs the DCI format monitoring according to the CRC scrambled by the C-RNTI (temporary C-RNTI).

Scenario 2:

when the cross component carrier scheduling is enabled, with regard to the secondary component carrier, if the secondary component carrier is the component carrier which executes the cross component carrier scheduling, in the UE-specific search space, the UE performs the PDCCH monitoring according to the method of the above configuration 1 or 2, and in the common search space, UE will perform the DCI format monitoring according to the CRC scrambled by the C-RNTI; if the secondary component carrier is the component carrier to which the cross component carrier scheduling is executed, the UE will monitor the DCI format of the UE-specific search space of the secondary component carrier on the component carrier which executes the cross component carrier scheduling to the secondary component carrier, and in the monitoring method, monitoring is performed according to the method of the above configuration 1, 2 or 3, but no DCI format in the common search space is monitored.

Example 2

In the carrier aggregation scenario, with regard to how the UE performs the PDCCH monitoring, the following ways can be followed.

In the carrier aggregation scenario, with regard to the primary component carrier, the UE performs the DCI format monitoring according to the CRCs scrambled by the C-RNTI, SPS C-RNTI, SI-RNTI, P-RNTI and RA-RNTI in the common search space, and performs the DCI format monitoring according to the CRCs scrambled by C-RNTI and SPS C-RNTI in the UE-specific search space, but which kind of DCI format to be monitored is defined by the transmission mode configured by the high layer signaling. However, with regard to the secondary component carrier, the UE can monitor the DCI formats in the UE-specific search space according to the method for monitoring the primary component carrier, and in the common search space, UE does not monitor all the DCI formats in the common search space, and specifically, the DCI format 1C, DCI format 1A, DCI format 0 and DCI format 3/3A are not monitored any more.

With regard to the secondary component carrier, the method for monitoring the PDCCH in the common search space and UE-specific search space of the secondary component carrier can be divided into the following two configurations.

Configuration 4:

with regard to the secondary component carrier, in the UE-specific search space, the UE performs the PDCCH monitoring according to the method for monitoring the primary component carrier, and the UE monitors the search space and time corresponding to the PDCCH candidates of the UE-specific search space, as shown in Table 7.

Therefore, the number of monitoring times in the UE-specific search space is still the same as that of the primary component carrier, which is (6+6+2+2)x2=32, and the number of monitoring times in the common search space is 0 instead of the (4+2)x2=12 in the primary component carrier.

Configuration 5:

with regard to the secondary component carrier, in the UE-specific search space, the UE performs the PDCCH monitoring according to the method for monitoring the primary component carrier, but it is required to add the number of PDCCH candidates, and the UE monitors the search space and time corresponding to the PDCCH candidates of the UE-specific search space, as shown in Table 9.

Wherein, A, B, C and D are values greater than or equal to 0 and less than or equal to 6 simultaneously, and A+B+C+D=6. For example, A=3, B=3, C=0, and D=0. For another example, A=6, B=0, C=0, and D=0.

Therefore, the number of monitoring times in the UE-specific search space is different from that of the primary component carrier, which changes from the original (6+6+2+2)x2=32 to (6+A+6+B+2+C+2+D)x2, and the number of monitoring times in the common search space is 0 instead of the (4+2)x2=12 in the primary component carrier.

With regard to the secondary component carrier, there are two scenarios where the design of PDCCH monitoring needs to be performed as follows.

Scenario 1:

when the cross component carrier scheduling is not enabled, with regard to the secondary component carrier, in the UE-specific search space, the UE performs the PDCCH monitoring according to the method of the above configuration 4 or 5, and in the common search space, UE does not monitor all the DCI formats in the common search space.

Scenario 2:

when the cross component carrier scheduling is enabled, with regard to the secondary component carrier, if the secondary component carrier is the component carrier which executes the cross component carrier scheduling, or if the secondary component carrier is the component carrier to which the cross component carrier scheduling is executed, in the UE-specific search space, the UE performs the PDCCH monitoring according to the method of the above configuration 4 or 5, and in the common search space, it does not monitor all the DCI formats in the common search space.
The present invention also provides a user equipment, and the user equipment is configured to: in a carrier aggregation scenario, according to a component carrier being a primary component carrier or a secondary component carrier, perform Physical Downlink Control Channel (PDCCH) monitoring in the component carrier.
Wherein, the user equipment is configured to: when the component carrier is the primary component carrier, in a common search space, perform Downlink Control Information (DCI) format monitoring according to Cyclical Redundancy Checks (CRCs) scrambled by a Cell Radio Network Temporary Identifier (C-RNTI), a Transmit Power Control-Physical Uplink Control Channel Radio Network Temporary Identifier (TPC-PUCCH-RNTI), a Transmit Power Control-Physical Uplink Shared Channel Radio Network Temporary Identifier (TPC-PUSCH-RNTI), a Semi-persistently Scheduled Cell Radio Network Temporary Identifier (SPS C-RNTI), a System Information-Cell Radio Network Temporary Identifier (SI-RNTI), a Paging-Cell Radio Network Temporary Identifier (P-RNTI) and a Random Access Channel-Cell Radio Network Temporary Identifier (RA-RNTI); and
in a User Equipment (UE)-specific search space, perform the DCI format monitoring according to the CRCs scrambled by the C-RNTI and the SPS C-RNTI.
Wherein, the user equipment is configured to: when the component carrier is the secondary component carrier, if a Physical Downlink Shared Channel (PDSCH) of the component carrier is scheduled by a PDCCH on the same component carrier, perform the PDCCH monitoring in a corresponding UE-specific search space and the common search space of the secondary component carrier.
Wherein, the user equipment is configured to: when the component carrier is the secondary component carrier, if the PDSCH of the component carrier is scheduled by the PDCCH on the same component carrier, in the UE-specific search space, perform the DCI format monitoring according to a CRC scrambled by the C-RNTI; and in the common search space, perform the DCI format monitoring according to the CRC scrambled by the C-RNTI.
Wherein, the user equipment is configured to: when the component carrier is the secondary component carrier, if the PDSCH of the component carrier is scheduled by a PDCCH on other component carriers, only perform the PDCCH monitoring in the UE-specific search space, and not perform the PDCCH monitoring in the common search space.
Wherein, the user equipment is configured to: when the component carrier is the secondary component carrier, if the PDSCH of the component carrier is scheduled by the PDCCH on other component carriers, in the UE-specific search space, perform the DCI format monitoring according to the CRC scrambled by the C-RNTI; and in the common search space, not monitor any DCI format.
Wherein, the user equipment is configured to: when the component carrier is the secondary component carrier, only perform the PDCCH monitoring in the corresponding UE-specific search space, and not perform the PDCCH monitoring in the common search space of the secondary component carrier.
Wherein, the user equipment is configured to: when the component carrier is the secondary component carrier, in the UE-specific search space, perform the DCI format monitoring according to the CRC scrambled by the C-RNTI; and in the common search space, not monitor any DCI format.
Wherein, the user equipment is configured to: when a random access operation is performed, in the UE-specific search space or the common search space, perform the DCI format monitoring according to a CRC scrambled by a temporary C-RNTI.
Wherein, the user equipment is configured to: when the component carrier is the secondary component carrier, in the UE-specific search space, monitor that search space and time corresponding to PDCCH candidates of the UE-specific search space are identical with the search space and time corresponding to the PDCCH candidates of the UE-specific search space monitored in the primary component carrier.
Wherein, the user equipment is configured to: when the component carrier is the secondary component carrier, in the UE-specific search space, monitor that the search space and time corresponding to the PDCCH candidates of the UE-specific search space are more than the search space and time corresponding to the PDCCH candidates of the UE-specific search space monitored in the primary component carrier, wherein, in one or multiple aggregation levels, K PDCCH candidates are added in total, and the K is not greater than 6.

Wherein, the K is 3.

Wherein, when no DCI format in the common search space of the secondary component carrier is detected, the K is 6.

Wherein, the user equipment is configured to: acquire the primary component carrier and the secondary component carrier according to a high layer signaling configuration, or acquire the primary component carrier and the secondary component carrier according to a carrier set configured by a high layer signaling.

In conclusion, with the present invention, the problem how to manage the PDCCH monitoring is solved in the carrier aggregation scenario of the LTE-Advanced.

The above description is just the specific embodiments of the present invention, but the protection scope of the present invention is not limited herein, within the technical scope disclosed by the present invention, any skilled person familiar to the art can easily think of changes and substitutions which should be all covered within the protection scope of the present invention. Therefore, the protection scope of the present invention should be subject to the protection scope described in the claims.

Industrial Applicability

With the present invention, the problem how to manage the PDCCH monitoring is solved in the carrier aggregation scenario of the LTE-Advanced.

**Claims**

1. A method for detecting downlink control information, comprising: in a carrier aggregation scenario, according to a component carrier being a primary component carrier or a secondary component carrier, a user equipment performing Physical Downlink Control Channel (PDCCH) monitoring in the component carrier.

2. The method according to claim 1, wherein,
   the performing the PDCCH monitoring in the component carrier comprises: when the component carrier is the primary component carrier, performing the PDCCH monitoring in a User Equipment (UE)-specific search space and a common search space.

3. The method according to claim 2, wherein,
   the performing the PDCCH monitoring in the component carrier comprises: when the component carrier is the primary component carrier, in the common search space, performing Downlink Control Information (DCI) format monitoring according to Cyclical Redundancy Checks (CRCs) scrambled by Cell Radio Network Temporary Identifier (C-RNTI), Transmit Power Control-Physical Uplink Control Channel Radio Network Temporary Identifier (TPC-PUCCH-RNTI), Transmit Power Control-Physical Uplink Shared Channel Radio Network Temporary Identifier (TPC-PUSCH-RNTI), Semi-persistently Scheduled Cell Radio Network Temporary Identifier (SPS C-RNTI), System Information-Cell Radio Network Temporary Identifier (SI-RNTI), Paging-Cell Radio Network Temporary Identifier (P-RNTI) and Random Access Channel-Cell Radio Network Temporary Identifier (RA-RNTI); and
   in the UE-specific search space, performing DCI format monitoring according to the CRCs scrambled by the C-RNTI and the SPS C-RNTI.

4. The method according to claim 1, wherein, the performing the PDCCH monitoring in the component carrier comprises: when the component carrier is the secondary component carrier, if a Physical Downlink Shared Channel (PDSCH) of the component carrier is scheduled by a PDCCH on the same component carrier, performing the PDCCH monitoring in a corresponding UE-specific search space and the common search space of the secondary component carrier.

5. The method according to claim 4, wherein,
   the performing the PDCCH monitoring in the component carrier comprises: when the component carrier is the secondary component carrier, if the PDSCH of the component carrier is scheduled by the PDCCH on the same component carrier, in the UE-specific search space, performing DCI format monitoring according to a CRC scrambled by C-RNTI; and in the common search space, performing the DCI format monitoring according to the CRC scrambled by the C-RNTI;
   or, when the component carrier is the secondary component carrier, if the PDSCH of the component carrier is scheduled by the PDCCH on the same component carrier, in the UE-specific search space, performing the DCI format monitoring according to the CRC scrambled by the C-RNTI; and in the common search space, performing the DCI format monitoring according to the CRCs scrambled by the C-RNTI, the TPC-PUCCH-RNTI and the TPC-PUSCH-RNTI.

6.  The method according to claim 4, wherein,
the performing the PDCCH monitoring in the component carrier comprises: when the component carrier is the secondary component carrier, if the PDSCH of the component carrier is scheduled by a PDCCH on other component carriers except the component carrier self, only performing the PDCCH monitoring in the UE-specific search space, and not performing the PDCCH monitoring in the common search space.

7.  The method according to claim 6, wherein,
the performing the PDCCH monitoring in the component carrier comprises: when the component carrier is the secondary component carrier, if the PDSCH of the component carrier is scheduled by the PDCCH on other component carriers, in the UE-specific search space, performing the DCI format monitoring according to a CRC scrambled by C-RNTI; and in the common search space, not monitoring any DCI format.

8.  The method according to claim 1, wherein,
the performing the PDCCH monitoring in the component carrier comprises: when the component carrier is the secondary component carrier, only performing the PDCCH monitoring in a corresponding UE-specific search space, and not performing the PDCCH monitoring in a common search space of the secondary component carrier.

9.  The method according to claim 8, wherein,
the performing the PDCCH monitoring in the component carrier comprises: when the component carrier is the secondary component carrier, in the UE-specific search space, performing DCI format monitoring according to the CRC scrambled by C-RNTI; and in the common search space, not monitoring any DCI format.

10. The method according to any one of claims 3 to 9, wherein,
the performing the PDCCH monitoring in the component carrier comprises: when a random access operation is performed, in the UE-specific search space or the common search space, performing the DCI format monitoring according to a CRC scrambled by a temporary C-RNTI.

11. The method according to any one of claims 4 to 9, wherein,
when the component carrier is the secondary component carrier, in the UE-specific search space, the user equipment monitors that search space and time corresponding to PDCCH candidates of the UE-specific search space are identical with the search space and time corresponding to the PDCCH candidates of the UE-specific search space monitored by the user equipment in the primary component carrier.

12. The method according to any one of claims 4 to 9, wherein,
when the component carrier is the secondary component carrier, in the UE-specific search space, the user equipment monitors that search space and time corresponding to PDCCH candidates of the UE-specific search space are more than the search space and time corresponding to the PDCCH candidates of the UE-specific search space monitored by the user equipment in the primary component carrier, wherein, in one or multiple aggregation levels, K PDCCH candidates are added in total, and the K is not greater than 6.

13. The method according to claim 12, wherein, the K is 3.

14. The method according to claim 12, wherein, when no DCI format in the common search space of the secondary component carrier is detected, the K is 6.

15. The method according to any one of claims 1 to 9, further comprising:

    according to a method for defining uplink and downlink transmission mode configuration information and a search space, a base station sending corresponding DCI formats in the primary component carrier and the secondary component carrier.

16. The method according to any one of claims 1 to 9, wherein,
the primary component carrier and the secondary component carrier are configured by a high layer signaling, or a carrier set configured by the high layer signaling represents the primary component carrier or the secondary component carrier.

**17.** A user equipment, the user equipment being configured to: in a carrier aggregation scenario, according to a component carrier being a primary component carrier or a secondary component carrier, perform Physical Downlink Control Channel (PDCCH) monitoring in the component carrier.

**18.** The user equipment according to claim 17, the user equipment being configured to: when the component carrier is the primary component carrier,
in a common search space, perform Downlink Control Information (DCI) format monitoring according to Cyclical Redundancy Checks (CRCs) scrambled by Cell Radio Network Temporary Identifier (C-RNTI), Transmit Power Control-Physical Uplink Control Channel Radio Network Temporary Identifier (TPC-PUCCH-RNTI), Transmit Power Control-Physical Uplink Shared Channel Radio Network Temporary Identifier (TPC-PUSCH-RNTI), Semi-persistently Scheduled Cell Radio Network Temporary Identifier (SPS C-RNTI), System Information-Cell Radio Network Temporary Identifier (SI-RNTI), Paging-Cell Radio Network Temporary Identifier (P-RNTI) and Random Access Channel-Cell Radio Network Temporary Identifier (RA-RNTI); and
in a User Equipment (UE)-specific search space, perform the DCI format monitoring according to the CRCs scrambled by the C-RNTI and the SPS C-RNTI.

**19.** The user equipment according to claim 17, wherein, the user equipment is configured to: when the component carrier is the secondary component carrier, if a Physical Downlink Shared Channel (PDSCH) of the component carrier is scheduled by a PDCCH on the same component carrier, perform the PDCCH monitoring in a corresponding UE-specific search space and the common search space of the secondary component carrier.

**20.** The user equipment according to claim 19, wherein,
the user equipment is configured to: when the component carrier is the secondary component carrier, if the PDSCH of the component carrier is scheduled by the PDCCH on the same component carrier, in the UE-specific search space, perform DCI format monitoring according to a CRC scrambled by C-RNTI; and in the common search space, perform the DCI format monitoring according to the CRC scrambled by the C-RNTI.

**21.** The user equipment according to claim 19, wherein, the user equipment is configured to: when the component carrier is the secondary component carrier, if the PDSCH of the component carrier is scheduled by a PDCCH on other component carriers, only perform the PDCCH monitoring in the UE-specific search space, and not perform the PDCCH monitoring in the common search space.

**22.** The user equipment according to claim 21, wherein, the user equipment is configured to: when the component carrier is the secondary component carrier, if the PDSCH of the component carrier is scheduled by the PDCCH on other component carriers except the component carrier self, in the UE-specific search space, perform DCI format monitoring according to a CRC scrambled by C-RNTI; and in the common search space, not monitor any DCI format.

**23.** The user equipment according to claim 17, wherein, the user equipment is configured to: when the component carrier is the secondary component carrier, only perform the PDCCH monitoring in a corresponding UE-specific search space, and not perform the PDCCH monitoring in a common search space of the secondary component carrier.

**24.** The user equipment according to claim 23, wherein,
the user equipment is configured to: when the component carrier is the secondary component carrier, in the UE-specific search space, perform DCI format monitoring according to a CRC scrambled by C-RNTI; and in the common search space, not monitor any DCI format.

**25.** The user equipment according to any one of claims 18 to 24, wherein,
the user equipment is configured to: when a random access operation is performed, in the UE-specific search space or the common search space, perform the DCI format monitoring according to a CRC scrambled by a temporary C-RNTI.

**26.** The user equipment according to any one of claims 19 to 24, wherein,
the user equipment is configured to: when the component carrier is the secondary component carrier, in the UE-specific search space, monitor that search space and time corresponding to PDCCH candidates of the UE-specific search space are identical with the search space and time corresponding to the PDCCH candidates of the UE-specific search space monitored in the primary component carrier.

27. The user equipment according to any one of claims 10 to 24, wherein, the user equipment is configured to: when the component carrier is the secondary component carrier, in the UE-specific search space, monitor that search space and time corresponding to PDCCH candidates of the UE-specific search space are more than the search space and time corresponding to the PDCCH candidates of the UE-specific search space monitored in the primary component carrier, wherein, in one or multiple aggregation levels, K PDCCH candidates are added in total, and the K is not greater than 6.

28. The user equipment according to claim 27, wherein, the K is 3.

29. The user equipment according to claim 27, wherein, when no DCI format in the common search space of the secondary component carrier is detected, the K is 6.

30. The user equipment according to any one of claims 17 to 24, wherein,
the user equipment is configured to: acquire the primary component carrier and the secondary component carrier according to a high layer signaling configuration, or acquire the primary component carrier and the secondary component carrier according to a carrier set configured by a high layer signaling.

Radio frame

Slot

| #0 | #1 | #2 | #3 | …… | #18 | #19 |

Subframe

## FIG. 1

Radio frame

Half frame

Slot          1ms

| Sub-frame #0 | Sub-frame #1 | Sub-frame #2 | Sub-frame #3 | Sub-frame #4 | Sub-frame #5 | Sub-frame #6 | Sub-frame #7 | Sub-frame #8 | Sub-frame #9 |

Sub-frame

## FIG. 2

# INTERNATIONAL SEARCH REPORT

| International application No. |
| --- |
| PCT/CN2010/080328 |

**A. CLASSIFICATION OF SUBJECT MATTER**

H04W24/00 (2009.01)i

According to International Patent Classification (IPC) or to both national classification and IPC

**B. FIELDS SEARCHED**

Minimum documentation searched (classification system followed by classification symbols)

IPC: H04W, H04Q, H04L, H04B

Documentation searched other than minimum documentation to the extent that such documents are included in the fields searched

Electronic data base consulted during the international search (name of data base and, where practicable, search terms used)

CPRSABS,CJFD, CNKI, VEN: carrier, aggregation, primary, component carrier, secondary, specific, PDCCH/physical downlink control channel,

**C. DOCUMENTS CONSIDERED TO BE RELEVANT**

| Category* | Citation of document, with indication, where appropriate, of the relevant passages | Relevant to claim No. |
| --- | --- | --- |
| PX | CN101867953A (ZTE CORP) 20 Oct. 2010 (20.10.2010) <br> Claims 1-30 | 1-30 |
| X | NOKIA, NOKIA SIEMENS NETWORKS. L1 Control Signaling with Carrier Aggregation in LTE-Advanced. 3GPP TSG-RAN WG1 Meeting #54bis R1-083730 <br> September 29th-October 3rd 2008 Paragraphs 2, 2.1 | 1,17 |
| Y | | 2, 4, 8, 15-16, 19, 23, 30 |
| Y | CN101478808A (ZTE CORP) 08 Jul. 2009 (08.07.2009) <br> Page 2, lines14-19 of the description <br> Claim 1 | 2, 4, 8, 15, 19, 23 <br> 16,30 |
| A | CN101610564A (ZTE CORP) 23 Dec. 2009 (23.12.2009) The whole document | 1-30 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 08 Mar. 2011 (08.03.2011) | **31 Mar. 2011 (31.03.2011)** |

| Name and mailing address of the ISA/CN <br> The State Intellectual Property Office, the P.R.China <br> 6 Xitucheng Rd., Jimen Bridge, Haidian District, Beijing, China 100088 <br> Facsimile No. 86-10-62019451 | Authorized officer <br> **JIANG, Yan** <br> Telephone No. (86-10)62411352 |
| --- | --- |

Form PCT/ISA /210 (second sheet) (July 2009)

## INTERNATIONAL SEARCH REPORT
Information on patent family members

| International application No. |
| --- |
| PCT/CN2010/080328 |

| Patent Documents referred in the Report | Publication Date | Patent Family | Publication Date |
| --- | --- | --- | --- |
| CN101867953A | 20.10.2010 | None | |
| CN101478808A | 08.07.2009 | None | |
| CN101610564A | 23.12.2009 | WO2010124628A1 | 04.11.2010 |

Form PCT/ISA /210 (patent family annex) (July 2009)